# EUROPEAN PATENT SPECIFICATION

(11) **EP 4 234 979 B1**
(45) Date of publication and mention of the grant of the patent: **14.10.2026**
(21) Application number: 23175134.8
(22) Date of filing: 12.01.2018
(51) Int. Cl.: B23D 49/16, B23D 51/16, B25F 5/02, F16H 1/14, F16H 21/36

(54) **RECIPROCATING SAW**
SÄGE MIT HIN UND HER GEHENDEM SÄGEBLATT
SCIE À VA-ET-VIENT

(30) Priority: 12.01.2017 US 201762445291 P
(43) Date of publication of application: 30.08.2023
(62) Document number(s) of the earlier application(s) in accordance with Art. 76 EPC: 18739420.0 / 3 568 253
(73) Proprietor: Milwaukee Electric Tool Corporation, Brookfield, WI 53005-2550 (US)
(72) Inventor: GALL, Simon M., Wisconsin 53012 (US)
(74) Representative: Marks & Clerk LLP

(56) References cited:
- DE-A1- 2 925 401
- US-A- 4 628 605
- US-A- 5 755 293
- US-A1- 2003 145 472
- US-A1- 2010 162 579

## Description

### CROSS-REFERENCE TO RELATED APPLICATIONS

This application claims priority benefit to U.S. Provisional Application No. 62/445,291, filed January 12, 2017.

### BACKGROUND

The present application relates to a power tool. In particular, the present application relates to a reciprocating saw. Reciprocating saws are used to cut a variety of objects made from a variety of materials, such as metal pipes, wood and dry wall. A cordless, compact reciprocating saw allows for cutting operations in tight spaces or awkward angles for plumbing, electrical, remodeling and HVAC applications.

US 5 755 293 A discloses a powertool according to the preamble of claim 1.

### SUMMARY

Aspects of the present invention are defined by the appended independent claims. Preferred embodiments of the present invention are defined by the appended dependent claims.

Described herein is a power tool including a housing having a handle configured to be grasped by a user, a motor supported by the housing, a driving gear rotated by the motor, and a driven gear engaging the driving gear to be rotated by the driving gear about a rotation axis. The power tool also includes a pin extending from the driven gear and offset from the rotation axis and a spindle having a yoke coupled to the pin to translate rotation of the driven gear into reciprocating motion of the spindle. A notch is formed in an outer periphery of the yoke to provide clearance for the driving gear as the spindle is driven by the pin.

Also described herein is a power tool including a housing having a handle configured to be grasped by a user, a motor supported by the housing, a driving gear rotated by the motor, and a driven gear engaging the driving gear to be rotated by the driving gear about a rotation axis. The power tool also includes a pin extending from the driven gear and offset from the rotation axis and a spindle having a yoke coupled to the pin to translate rotation of the driven gear into reciprocating motion of the spindle. The spindle defines a spindle axis, and the yoke includes a notch that is offset from the spindle axis. The notch provides clearance for the driving gear as the spindle is driven by the pin.

Also described herein is a housing having a handle configured to be grasped by a user, a motor supported by the housing, a driving gear rotated by the motor, a first driven gear engaging the driving gear to be rotated by the driving gear about a rotation axis and a second driven gear facing the first driven gear and engaging the driving gear to be rotated by the driving gear about the rotation axis. The second driven gear defines a channel. The power tool also includes a pin extending from the first driven gear and offset from the rotation axis. The pin has an end received in the channel of the second driven gear. The power tool also includes a spindle having a yoke coupled to the pin to translate rotation of the first and second driven gears into reciprocating motion of the spindle.

### BRIEF DESCRIPTION

FIG. 1 is a perspective view of a reciprocating saw according to one embodiment of the invention.
FIG. 2 is a side view of the reciprocating saw shown in FIG. 1.
FIG. 3A is a cross-sectional view of the reciprocating saw of FIG. 1.
FIG. 3B is another cross-sectional view of the reciprocating saw of FIG. 1.
FIG. 4A is a detailed view of a portion of the reciprocating saw of FIG. 1.
FIG. 4B is a detailed view of another portion of the reciprocating saw of FIG. 1.
FIG. 5 is a perspective view of a gear of the reciprocating saw of FIG. 1.
FIG. 6 is a perspective view of another gear of the reciprocating saw of FIG. 1.
FIG. 7 is a side view of a spindle of the reciprocating saw of FIG. 1.
FIG. 8 is a perspective view of the spindle of FIG. 7.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

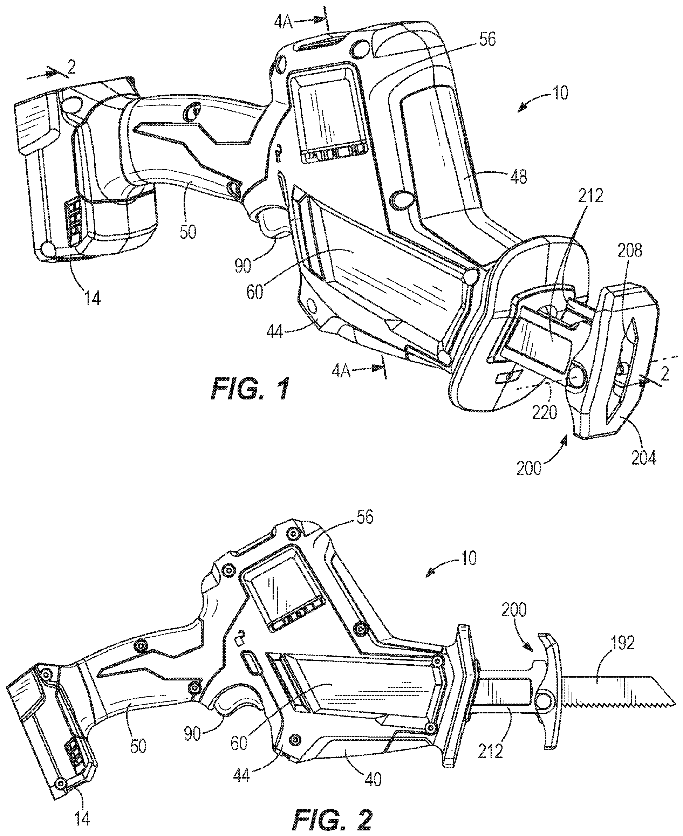

A portable power tool 10 is shown in FIGS. 1-3B. In these embodiments, the power tool 10 is a reciprocating saw. In the illustrated embodiments, the saw 10 is powered by a power tool battery pack 14. The battery pack 14 may be configured to connect and power a variety of tools in addition to the reciprocating saw 10. In other embodiments, the saw 10 may be a corded power tool. In still other embodiments, the power tool may be another hand-held power tool, such as, for example, another type of power tool that translates rotary motion into reciprocating motion.

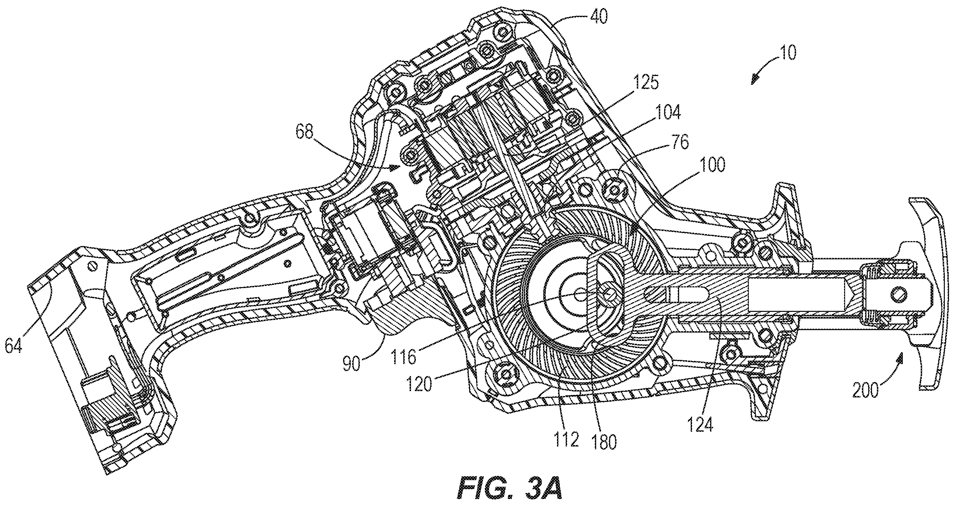

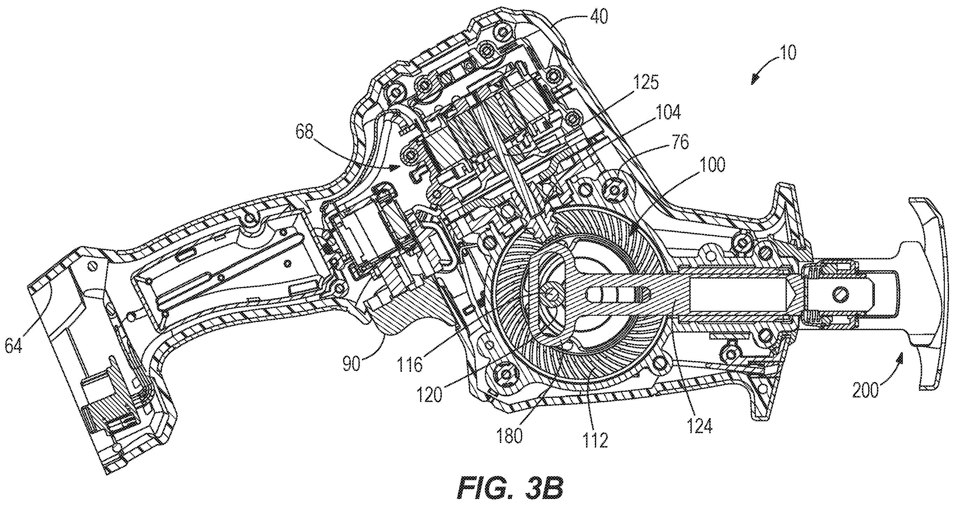

The saw 10 includes a housing 40. As shown in FIG. 1, the housing 40 has a first housing portion 44 and a second housing portion 48. Each housing portion 44, 48 is formed of plastic; however, in some embodiments, the housing portions 44, 48 may be formed of other materials. The housing 40 defines a handle 50, a motor housing portion 56, and a gear case housing portion 60. The handle 50 includes at least one grip surface configured to be grasped by a user. In the illustrated embodiments, the handle 50 can also define a battery receiving portion 64 (FIGS. 3A and 3B) for receiving the battery pack 14. In other embodiments, the battery receiving portion 64 may be defined elsewhere within the housing 40. The motor housing portion 56 supports a motor 68 (FIGS. 3A and 3B), and the gear case housing portion 60 in turn supports a gear case (FIGS. 2 and 3). The gear case includes first and second gear case portions 76, only one of which is shown in FIGS. 3A and 3B.

As shown in FIGS. 3A and 3B, the battery receiving portion 64 is configured as a cavity. When the battery pack 14 (FIG. 1) is connected to the saw 10, the pack 14 is inserted into the cavity and substantially closes the cavity. As shown in FIGS. 1-3B, an actuator 90 is positioned on the handle 50 for powering the saw 10. In particular, the actuator 90 is electrically coupled to the battery pack 14 and the motor 68 to selectively energize the motor 68 when actuated. As illustrated, the actuator 90 is an on/off trigger. In other embodiments, the switch 90 may be a variable speed trigger, a two speed trigger, a push button or another suitable actuator.

Referring to FIGS. 3A-4B, the first and second gear case portions 76 enclose a drive system 100 for the saw 10. In this embodiment, the drive system 100 is a scotch yoke mechanism. The drive system 100 includes a driving gear 104, a first driven gear 108, a second driven gear 112, a pin 116, a bushing 120, and a spindle 124. The driving gear 104 is coupled to an output shaft 125 of the motor 68 for rotation with the output shaft 125. The illustrated driving gear 104 is an output spindle having a tapered or frustoconically-shaped outer surface. More particularly, the illustrated driving gear 104 is a spiral bevel pinion.

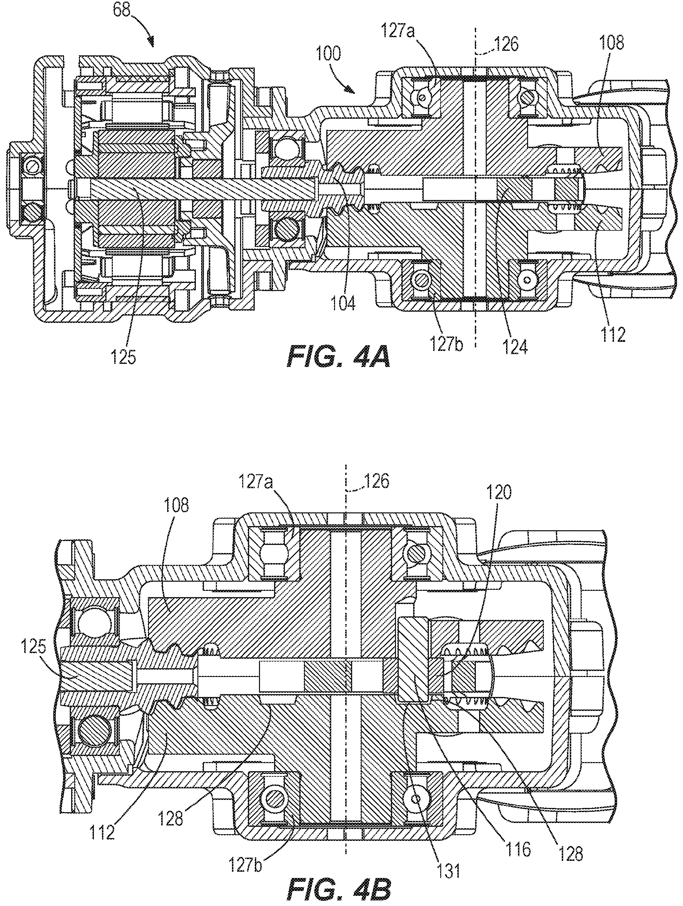

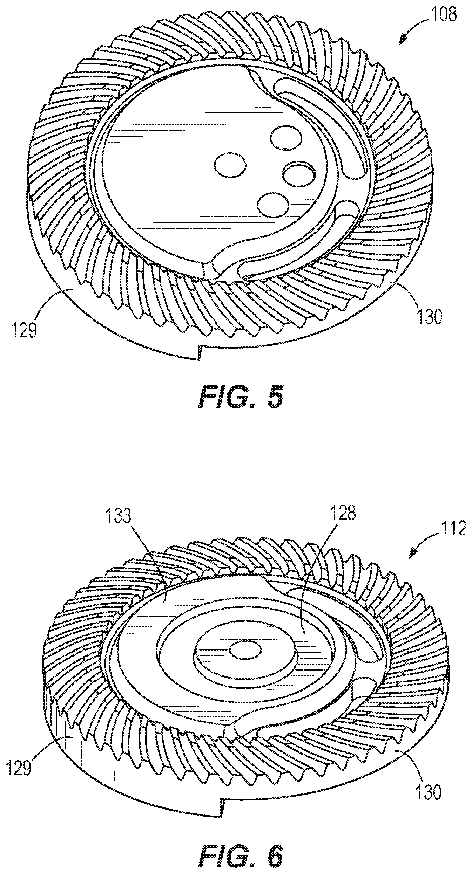

Further with respect to FIGS. 4A and 4B, the first and second driven gears 108, 112 are positioned on opposing sides of the driving gear 104. The first and second driven gears 108, 112 both engage the driving gear 104 to be rotated about a rotation axis 126. Each driven gear 108, 112 is supported by a bearing 127a, 127b for rotation relative to the housing 40. The bearings 127a, 127b may be press-fit or otherwise secured within recesses formed in the housing portions 44, 48. As shown in FIGS. 5 and 6, the illustrated first driven gear 108 is a first bevel gear, and the second driven gear 112 is a second bevel gear. More particularly, the first and second driven gears 108, 112 are spiral bevel gears. Each driven gear 108, 112 includes a relatively thick portion 129 and a relatively thin portion 130 that function as counterbalance weights during rotation of the gears 108, 112.

Referring back to FIGS. 3A-4B, the pin 116 extends from the first driven gear 108 toward the second driven gear 112. The pin 116 is offset from the rotation axis 126 of the driven gears 108, 112. In the illustrated embodiment, the pin 116 is a separate element that is secured (e.g., press-fit, etc.) to the first driven gear 108 for movement about the rotation axis 126. In other embodiments, the pin 116 may be integrally formed as a single component with the first driven gear 108. The illustrated pin 116 is received by the bushing 120 and includes an end 131 that extends beyond the bushing 120. The end 131 of the pin 116 is received in a channel 128 (FIGS. 4B) of the second driven gear 112. As shown in FIG. 6, the illustrated channel 128 is a recessed track formed in a face 133 of the second driven gear 112 that faces the first driven gear 108. The recessed track is formed as a continuous circle or annulus in the face 133.

As shown in Figs. 3A and 3B, the spindle 124 includes a yoke 180, a spindle shaft 184, and a blade clamp (not shown). The blade clamp is opposite the yoke 180. In the illustrated embodiment, the yoke 180 is integrally formed as a single piece with the spindle 124 such that the yoke 180 is part of the spindle 124. In other embodiments, the yoke 180 may be a separate piece that is secured to the spindle 124. As shown in FIG. 2, a tool element 192, such as a saw blade, is coupled to the spindle shaft 184 via the blade clamp. The blade clamp may include the blade clamp assembly shown and described in U.S. Patent No. 6,725,548, entitled "Keyless Blade Clamp Mechanism" and issued April 27, 2004. The blade clamp can also be configured to accept a variety of reciprocating saw blades, jig saw blades, and/or hack saw blades.

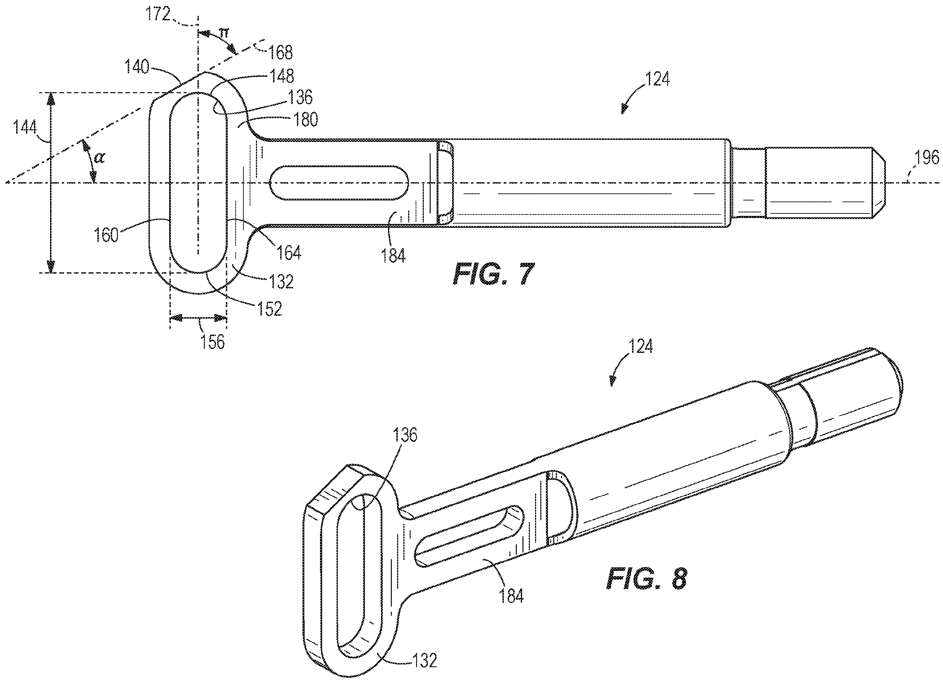

With reference to Figs. 3A, 3B, 7, and 8, the yoke 180 includes a body 132 with an aperture 136 extending therethrough. The body 132 also has a notch 140 formed in an outer periphery of the yoke 180. In the illustrated embodiment, the notch 140 is formed at an upper peripheral corner of the yoke 180 nearest the driving gear 104. The notch 140 removes material from the yoke 180 to provide clearance as the yoke 180 moves within the gear case. More particularly, the notch 140 allows the yoke 180 to translate rotation of the driven gears 108, 112 into reciprocating motion without having the yoke 180 contact the driving gear 104.

The aperture 136 receives the pin 116 and the bushing 120 (FIGS. 3A and 3B). In the illustrated embodiment, the aperture 136 is an elongated oval-shape. More specifically, the aperture 136 defines a first length 144 between arcuate sides 148, 152 and a second length 156 between substantially parallel sides 160, 164. The second length 156 is generally equal to the outer diameter of the bushing 120 so that the bushing 120 pushes (e.g., reciprocates) the yoke 180 forward and backward as the driven gears 108, 112 are rotated. The first length 144 is longer than the second length 156 and provides clearance for the pin 116 and the bushing 120 to move laterally within the aperture 136. The aperture 136 defines a longitudinal axis 172 extending along the first length 144. In the illustrated embodiment, the notch 140 is formed along an axis 168 in the outer perimeter of the yoke 180. The axis 168 is obliquely angled relative to the longitudinal axis 172 of the aperture 136. In some embodiments, the axis 168 of the notch 140 may be oriented at an angle π between 45° and 75° relative to the longitudinal axis 172. In the illustrated embodiment, the angle π is about 60°.

The spindle 124 and the saw blade 192 are positioned along a longitudinal spindle axis 196 defined along a length of the spindle 124. During operation of the saw 10, the spindle 124 translates back and forth (e.g., reciprocates) along the longitudinal axis 196. In the illustrated embodiment, the notch 140 is offset from the longitudinal axis 196 of the spindle 124. In particular, the notch 140 is formed in a corner of the yoke 180 so the yoke 180 is nonsymmetrical about both the longitudinal aperture axis 172 and the longitudinal spindle axis 196. As shown in FIGS. 3A and 3B, the output shaft 125 of the motor 68 is oriented at an oblique angle relative to the longitudinal spindle axis 196 so the driving gear 104 is positioned adjacent (i.e., nearest to) the corner of the yoke 180 with the notch 140. Moreover, the axis 168 of the notch 140 is obliquely angled relative to the longitudinal axis 196 of the spindle 124. In some embodiments, the axis 168 of the notch 140 may be oriented at an angle α between 15° and 45° relative to the longitudinal axis 196. In the illustrated embodiment, the angle α is about 30°.

In operation, the driving gear 104 is coupled to the output shaft 125 of the motor 68. As the output shaft 125 rotates, the pinion 104 rotates and engages teeth of the driven gears 108, 112 to rotate the gears 108, 112. The driven gears 108, 112 counterbalance each other as well as the spindle 124 to counterbalance the forces from the reciprocating motion of the spindle 124. Since the pin 116 is offset from the axis of rotation 126 of the driven gears 108, 112, the pin 116 moves around the axis of rotation 126 as the driven gears 108, 112 rotate. The pin 116 also moves within the aperture 136 of the yoke 180 to reciprocate the yoke 180 and the spindle 124. The notch 140 provides clearance for the pinion 104 during reciprocating motion to allow for an increased reciprocating stroke length.

When the drive system 100 is driving the tool element 192, the bushing 120 moves up and down along the pin 116. By defining the channel 128 (Figs. 4B and 6) in the second driven gear 112 for the pin 116 and extending the length of the dive pin 116, the bushing 120 can move up and down between the first and the second driven gears 108, 112 and remain in contact with the pin 116. This arrangement helps reduce uneven wearing of the inner surface of the bushing 120.

In some embodiments, the saw 10 further includes multiple modes that allow the user to change the output reciprocating speed of the tool element 192. The modes may allow the change in reciprocating speed by adjusting the motor speed or by adjusting the physical gearing. Moreover, the user may change between the modes via an actuator on the housing, a remote device, or an application on a smart phone or tablet computer.

As shown in FIGS. 1 and 2, the saw 10 also includes a shoe assembly 200. The shoe assembly 200 is coupled to a front end of the housing 40 opposite from the battery pack 14. In the embodiment shown, the shoe assembly 200 is a movable (i.e., pivotable) shoe assembly. The shoe assembly 200 includes a front surface or plate 204 which engages or rests on a workpiece. The front plate 204 also defines an opening 208 for the tool element 192 to pass through. The front plate 204 is movably or pivotably coupled to two connecting members 212, which connect the shoe assembly 200 to the housing 40. The front plate 204 is pivotable about an axis 220. In other embodiments (not shown), the shoe assembly 200 may be an otherwise adjustable shoe assembly or a fixed show assembly.

Various features and advantages of the invention are set forth in the following claims.

## Claims

1. A power tool (10) comprising:
a housing (40) having a handle configured to be grasped by a user;
a motor (68) supported by the housing;
a driving gear (104) rotated by the motor;
a driven gear (108) engaging the driving gear to be rotated by the driving gear about a rotation axis (126);
a pin (116) extending from the driven gear and offset from the rotation axis; and
a spindle (124) having a yoke (180) coupled to the pin to translate rotation of the driven gear into reciprocating motion of the spindle, the spindle defining a longitudinal spindle axis (196),
**characterised in that**
the yoke includes a notch (140) that is offset from the longitudinal spindle axis and that provides clearance for the driving gear as the spindle is driven by the pin.

2. The power tool (10) of claim 1, the yoke (180) defining a longitudinal aperture axis (172), and the yoke being nonsymmetrical about both the longitudinal spindle axis (196) and the longitudinal aperture axis.

3. The power tool (10) of claim 1 or 2, wherein the notch (140) is formed in an outer periphery of the yoke (180), the notch defining a longitudinal notch axis (168) that is positioned at a first angle (α) relative to the longitudinal spindle axis (196) and a second angle (π) relative to the longitudinal aperture axis (172).

4. The power tool (10) of claim 3, wherein an output (125) of the motor is oriented at an oblique angle relative to the longitudinal spindle axis (196).

5. The power tool (10) of claim 3, wherein the first angle (α) is an oblique angle and the second angle (π) is an oblique angle.

6. The power tool (10) of claim 3:
(a) wherein the first angle (α) ranges from between 15 degrees and 45 degrees; or
(b) wherein the second angle (π) ranges from between 45 degrees and 75 degrees.

7. The power tool (10) of claim 3, wherein the first angle (α) is different from the second angle (π).

8. The power tool (10) of claim 1, wherein the yoke (180) includes an aperture (136) that defines the longitudinal aperture axis (172), the aperture has a first length (144) measured in a direction parallel to the longitudinal aperture axis and a second length (156) measured in a direction perpendicular to the longitudinal aperture axis, and wherein the second length is shorter than the first length.

9. The power tool (10) of claim 8, further comprising a bushing (120) positioned in the aperture (136), the pin (116) being received by the bushing.

10. The power tool (10) of claim 9, wherein an outer diameter of the bushing (120) is substantially equal to the second length (156).

11. The power tool (10) of claim 1, wherein the notch (140) is obliquely offset from the longitudinal spindle axis (196).

12. The power tool (10) of claim 11, wherein the notch (140) defines a longitudinal notch axis (168) of the yoke (180), the longitudinal spindle axis (196) being at an angle (α) relative to the longitudinal notch axis.

13. The power tool (10) of claim 12, wherein the angle (α) ranges from between 15 degrees and 45 degrees.

14. The power tool (10) of claim 11, wherein the notch (140) defines a longitudinal notch axis (168) of the yoke (180), and wherein the yoke includes an aperture (136) that receives the pin (116) and that defines the longitudinal aperture axis (172), the longitudinal aperture axis is at an angle (π) relative to the longitudinal notch axis (168).

15. The power tool (10) of claim 14, wherein the angle (π) ranges from between 45 degrees and 75 degrees.

## Patentansprüche

1. Elektrowerkzeug (10), umfassend:
ein Gehäuse (40), das einen Griff aufweist, der dazu konfiguriert ist, durch einen Benutzer erfasst zu werden;
einen Motor (68), der durch das Gehäuse getragen wird;
ein Antriebszahnrad (104), das durch den Motor gedreht wird;
ein angetriebenes Zahnrad (108), das mit dem Antriebszahnrad in Eingriff steht, um durch das Antriebszahnrad um eine Drehachse (126) gedreht zu werden;
einen Stift (116), der sich von dem angetriebenen Zahnrad erstreckt und von der Drehachse versetzt ist; und
eine Spindel (124), die ein Joch (180) aufweist, das an den Stift gekoppelt ist, um Drehung des angetriebenen Zahnrads in eine Hin- und Herbewegung der Spindel zu übersetzen, wobei die Spindel eine Spindellängsachse (196) definiert, **dadurch gekennzeichnet, dass**
das Joch eine Kerbe (140) beinhaltet, die von der Spindellängsachse versetzt ist und Freiraum für das Antriebszahnrad bereitstellt, während die Spindel von dem Stift angetrieben wird.

2. Elektrowerkzeug (10) nach Anspruch 1, wobei das Joch (180) eine Öffnungslängsachse (172) definiert und das Joch sowohl um die Spindellängsachse (196) als auch um die Öffnungslängsachse nicht symmetrisch ist.

3. Elektrowerkzeug (10) nach Anspruch 1 oder 2, wobei die Kerbe (140) in einem Außenumfang des Jochs (180) gebildet ist, die Kerbe eine Kerbenlängsachse (168) definiert, die in einem ersten Winkel (α) relativ zur Spindellängsachse (196) und einem zweiten Winkel (π) relativ zur Öffnungslängsachse (172) positioniert ist.

4. Elektrowerkzeug (10) nach Anspruch 3, wobei ein Ausgang (125) des Motors in einem schrägen Winkel relativ zur Spindellängsachse (196) ausgerichtet ist.

5. Elektrowerkzeug (10) nach Anspruch 3, wobei der erste Winkel (α) ein spitzer Winkel ist und der zweite Winkel (π) ein spitzer Winkel ist.

6. Elektrowerkzeug (10) nach Anspruch 3:
(a) wobei der erste Winkel (α) zwischen 15 Grad und 45 Grad liegt; oder
(b) wobei der zweite Winkel (π) zwischen 45 Grad und 75 Grad liegt.

7. Elektrowerkzeug (10) nach Anspruch 3, wobei sich der erste Winkel (α) von dem zweiten Winkel (π) unterscheidet.

8. Elektrowerkzeug (10) nach Anspruch 1, wobei das Joch (180) eine Öffnung (136) beinhaltet, die die Öffnungslängsachse (172) definiert, die Öffnung eine erste Länge (144), die in einer Richtung parallel zur Öffnungslängsachse gemessen wird, und eine zweite Länge (156) aufweist, die in einer Richtung senkrecht zu der Längsachse der Öffnung gemessen wird, und wobei die zweite Länge kürzer als die erste Länge ist.

9. Elektrowerkzeug (10) nach Anspruch 8, das weiter eine Buchse (120) umfasst, die in der Öffnung (136) positioniert ist, wobei der Stift (116) durch die Buchse aufgenommen ist.

10. Elektrowerkzeug (10) nach Anspruch 9, wobei ein Außendurchmesser der Buchse (120) im Wesentlichen gleich der zweiten Länge (156) ist.

11. Elektrowerkzeug (10) nach Anspruch 1, wobei die Kerbe (140) schräg von der Spindellängsachse (196) versetzt ist.

12. Elektrowerkzeug (10) nach Anspruch 11, wobei die Kerbe (140) eine Kerbenlängsachse (168) des Jochs (180) definiert, wobei die Spindellängsachse (196) einen Winkel (α) relativ zur Kerbenlängsachse aufweist.

13. Elektrowerkzeug (10) nach Anspruch 12, wobei der Winkel (α) zwischen 15 Grad und 45 Grad liegt.

14. Elektrowerkzeug (10) nach Anspruch 11, wobei die Kerbe (140) eine Kerbenlängsachse (168) des Jochs (180) definiert, und wobei das Joch eine Öffnung (136) beinhaltet, die den Stift (116) aufnimmt und die die Öffnungslängsachse (172) definiert, wobei die Öffnungslängsachse einen Winkel (π) relativ zur Kerbenängsachse (168) bildet.

15. Elektrowerkzeug (10) nach Anspruch 14, wobei der Winkel (π) zwischen 45 Grad und 75 Grad liegt.

## Revendications

1. Outil électrique (10) comprenant :
un logement (40) présentant une poignée configurée pour être saisie par un utilisateur ;
un moteur (68) supporté par le logement ;
un engrenage d'entraînement (104) mis en rotation par le moteur ;
un engrenage entraîné (108) venant en prise avec l'engrenage d'entraînement pour être mis en rotation par l'engrenage d'entraînement autour d'un axe de rotation (126) ;
une goupille (116) s'étendant à partir de l'engrenage entraîné et étant décalée de l'axe de rotation ; et
une broche (124) présentant un étrier (180) accouplé à la goupille pour traduire une rotation de l'engrenage entraîné en mouvement de va-et-vient de la broche, la broche définissant un axe de broche longitudinal (196), **caractérisé en ce que**
l'étrier comprend une encoche (140) qui est décalée par rapport à l'axe de broche longitudinal et qui fournit un dégagement pour l'engrenage d'entraînement lorsque la broche est entraînée par la goupille.

2. Outil électrique (10) selon la revendication 1, l'étrier (180) définissant un axe d'ouverture longitudinal (172), et l'étrier étant non symétrique à la fois par rapport à l'axe de broche longitudinal (196) et à l'axe d'ouverture longitudinal.

3. Outil électrique (10) selon la revendication 1 ou 2, dans lequel l'encoche (140) est formée dans une périphérie externe de l'étrier (180), l'encoche définissant un axe d'encoche longitudinal (168) qui est positionné à un premier angle (α) par rapport à l'axe de broche longitudinal (196) et à un second angle (n) par rapport à l'axe d'ouverture longitudinal (172).

4. Outil électrique (10) selon la revendication 3, dans lequel une sortie (125) du moteur est orientée à un angle oblique par rapport à l'axe de broche longitudinal (196).

5. Outil électrique (10) selon la revendication 3, dans lequel le premier angle (α) est un angle oblique et le second angle (n) est un angle oblique.

6. Outil électrique (10) selon la revendication 3 :
(a) dans lequel le premier angle (α) varie entre 15 degrés et 45 degrés ; ou
(b) dans lequel le second angle (n) varie entre 45 degrés et 75 degrés.

7. Outil électrique (10) selon la revendication 3, dans lequel le premier angle (α) est différent du second angle (n).

8. Outil électrique (10) selon la revendication 1, dans lequel l'étrier (180) comprend une ouverture (136) qui définit l'axe d'ouverture longitudinal (172), l'ouverture présente une première longueur (144) mesurée dans une direction parallèle à l'axe d'ouverture longitudinal et une seconde longueur (156) mesurée dans une direction perpendiculaire à l'axe d'ouverture longitudinal, et dans lequel la seconde longueur est plus courte que la première longueur.

9. Outil électrique (10) selon la revendication 8, comprenant en outre une douille (120) positionnée dans l'ouverture (136), la goupille (116) étant reçue par la douille.

10. Outil électrique (10) selon la revendication 9, dans lequel un diamètre externe de la douille (120) est sensiblement égal à la seconde longueur (156).

11. Outil électrique (10) selon la revendication 1, dans lequel l'encoche (140) est décalée obliquement de l'axe de broche longitudinal (196).

12. Outil électrique (10) selon la revendication 11, dans lequel l'encoche (140) définit un axe d'encoche longitudinal (168) de l'étrier (180), l'axe de broche longitudinal (196) étant à un angle (α) par rapport à l'axe d'encoche longitudinal.

13. Outil électrique (10) selon la revendication 12, dans lequel l'angle (α) varie entre 15 degrés et 45 degrés.

14. Outil électrique (10) selon la revendication 11, dans lequel l'encoche (140) définit un axe d'encoche longitudinal (168) de l'étrier (180), et dans lequel l'étrier comprend une ouverture (136) qui reçoit la goupille (116) et qui définit l'axe d'ouverture longitudinal (172), l'axe d'ouverture longitudinal est à un angle (n) par rapport à l'axe d'encoche longitudinal (168).

15. Outil électrique (10) selon la revendication 14, dans lequel l'angle (n) varie entre 45 degrés et 75 degrés.
